# EUROPÄISCHE PATENTSCHRIFT

(11) **EP 1 566 349 B1**
(45) Veröffentlichungstag und Bekanntmachung des Hinweises auf die Patenterteilung: **28.11.2007**
(21) Anmeldenummer: 04029518.0
(22) Anmeldetag: 14.12.2004
(51) Int. Cl.: B65G 1/04, B23Q 7/10

(54) **Handhabungszelle und Fertigungsanlage**
Handling cell and manufacturing system
Cellule de manipulation et système de fabrication

(30) Priorität: 16.01.2004 DE 102004003587
(43) Veröffentlichungstag der Anmeldung: 24.08.2005
(73) Patentinhaber: FELSOMAT GmbH & Co. KG, D-75203 Königsbach-Stein (DE)
(72) Erfinder: Jäger, Helmut F., 75203 Königsbach-Stein (DE)
(74) Vertreter: Kohler Schmid Möbus

(56) Entgegenhaltungen:
- EP-A- 0 071 884
- EP-A- 0 865 869
- EP-A- 1 287 947
- GB-A- 2 124 941
- US-A- 5 737 827

## Beschreibung

Die vorliegende Erfindung betrifft eine Handhabungszelle zum Handhaben von Trägern für Werkstücke und/oder Werkzeuge (Werkstückträger).

Ferner betrifft die vorliegende Erfindung eine Fertigungsanlage, die wenigstens eine Bearbeitungsstation, beispielsweise eine Werkzeugmaschine, eine Handhabungszelle und wenigstens eine Transfereinrichtung, beispielsweise ein Portal, aufweist, das die Bearbeitungsstation mit der Handhabungszelle verbindet.

Solche Handhabungszellen werden in Fertigungsanlagen in steigendem Maße eingesetzt. Sie dienen in erster Linie als Puffer bzw. als Schnittstelle zwischen einem automatisierten Teil einer Fertigungsanlage und der manuellen Bereitstellung von zu bearbeitenden Werkstücken bzw. zum Abholen von bearbeiteten Werkstücken.

Die Werkstücke werden dabei auf Werkstückträgern bereitgestellt. Ein Werkstückträger kann beispielsweise eine Palette, ein Korb oder ähnliches sein. Ein Werkstückträger kann zur Aufnahme eines einzelnen Werkstückes oder zur Aufnahme einer Mehrzahl von Werkstücken geeignet sein.

Ferner kann ein Werkstückträger auch zur Aufnahme von Werkzeugen geeignet sein. Werkzeuge und Werkstücke können auch gemeinsam auf einem Werkstückträger angeordnet sein.

Im Folgenden wird zur Vereinfachung der Beschreibung generell davon ausgegangen, dass auf einem Werkstückträger ein oder mehrere Werkstücke angeordnet sind.

Dabei ist es in der Regel so, dass die Werkstücke auf dem Werkstückträger in einer vorgegebenen Position angeordnet sind, derart, dass das Werkstück automatisiert von einer Handhabungseinrichtung von dem Werkstückträger entnommen werden kann. Die Handhabungseinrichtung kann das Werkstück dann von dem Werkstückträger aus automatisiert einer Bearbeitungsstation, beispielsweise einer Werkzeugmaschine oder ähnlichem, zuführen.

Die Handhabungseinrichtung umfasst dabei in der Regel die Handhabungszelle als auch die Transfereinrichtung (in der Regel ein Portal).

Das in der Bearbeitungsstation bearbeitete Werkstück kann dann von der Handhabungseinrichtung weitertransportiert werden, zu einer weiteren Bearbeitungsstation. Alternativ ist es auch möglich, dass das Werkstück wieder zurückgebracht und auf einem Werkstückträger abgelegt wird. Der Werkstückträger kann derselbe sein wie jener, von dem das Rohteil entnommen wurde. Es kann sich auch um einen anderen Werkstückträger handeln.

Die Werkstückträger werden in der Regel nicht einzeln in die Handhabungszelle eingeschleust. Bei manchen Automationszellen ist eine Tür vorgesehen, um einen Stapel derartiger Werkstückträger auf einmal (beispielsweise auf einem Wagen) in die Handhabungszelle einzuschleusen (vgl. beispielsweise. EP 0 865 869 B1).

Diese bekannten Handhabungszellen sind jedoch vergleichsweise unflexibel, was ihre Einbindung in eine Fertigungsanlage betrifft. In der Regel sind sie für einen speziellen Einsatzzweck eingerichtet.

Ein weiteres Beispiel einer Fertigungsanlage unter Einsatz von Handhabungseinrichtungen ist offenbart in der Druckschrift GB 2 124 941 A.

Hierbei sind zwei oder mehr vertikale Speicheranordnungen entlang einer ersten Achse angeordnet. Zwischen zwei der Speicheranordnungen ist ein Vertikallift angeordnet. Parallel zu dieser ersten Achse verläuft ein Flurförderfahrzeug, das Paletten von dem Vertikallift übernimmt, und zwar in Richtung senkrecht zu der ersten Achse. Von dem Flurförderfahrzeug werden die Paletten dann auf einen Übergabeplatz übergeben, von dem aus einzelne Werkstücke dann einer Werkzeugmaschine zugeführt werden.

Ferner ist aus der EP 1 287 947 A1 eine Handhabungsvorrichtung bekannt, die zu Handhabung und Bereitstellung von Werkstücken ausgelegt ist. Die Handhabungsvorrichtung weist in einer Ausführungsform zwei Lagerstationen mit übereinander angeordneten Aufnahmeplätzen zur Aufnahme von Paletten auf. Zwischen den Lagerstationen ist eine Hebestation angeordnet, die dazu ausgelegt ist, Paletten in die verschiedenen Aufnahmeplätze der Lagerstationen zu überführen.

An der Außenseite eines Gestells ist ferner eine Bereitstellungsstation vorgesehen, auf der eine Palette angeordnet werden kann.

Aus der Druckschrift EP 0 071884 A1 ist ferner eine Regalsystem bekannt, dem eine Vertikallift zugeordnet ist, der zwischen zwei gegenüberliegenden Regalen angeordnet ist.

Die US 5,737,827 beschreibt ein automatisches Montagesystem, mit zwei Regallagern für einzelne Paletten und einem zwischen diesen verfahrenden Palettenlift. Vor einer Außenseite eines der Regallager verfährt ein weiterer Palettenlift, mittels dessen Montage- und Inspektionszellen mit Paletten bestückt werden können. Dieses Montagesystem verfügt über einen einzigen Einschleuseplatz für eine einzelne Palette. Dadurch ist der Palettenumschlag relativ aufwändig.

Vor dem obigen Hintergrund ist es die Aufgabe der vorliegenden Erfindung, eine verbesserte Handhabungszelle sowie eine verbesserte Fertigungsanlage mit einer derartigen Handhabungszelle anzugeben.

Diese Aufgabe wird mit einer Handhabungszelle zum Handhaben von Trägern für Werkstücke und/oder Werkzeuge (Werkstückträger) gelöst, die gemäß Anspruch 1 ausgebildet ist.

Die obige Aufgabe wird ferner durch eine Fertigungsanlage gelöst, die eine derartige Handhabungszelle verwendet.

Bei der erfindungsgemäßen Handhabungszelle dient der am Boden des Gehäuses angebrachte Schleusenplatz zum Einschleusen einer Mehrzahl von Werkstückträgern (Paletten) in die Handhabungszelle und folglich in den Fertigungsfluss. Die eingeschleusten Werkstückträger können dann entweder sofort oder nach Bedarf auf die einzelnen Lagerplätze der Lagerstationen verteilt werden. In gleichem Maße ist es z.B. möglich, Werkstückträger mit bearbeiteten Werkstücken auf diesem Stapelwagen abzulegen, so dass eine Bedienperson den Stapelwagen anschließend aus der Handhabungszelle herausfahren kann, und die bearbeiteten Werkstücke werden demzufolge aus dem automatisierten Fertigungsfluss herausgenommen.

Alternativ ist es natürlich auch denkbar, dass die Werkstückträger insgesamt über die Lagerplätze weitertransportiert werden, so dass immer leere Stapelwagen aus der Handhabungszelle entnommen werden und gefüllte Stapelwagen zugeführt werden.

Ein am Boden des Gehäuses ausgebildeter Schleusenplatz kann generell alternativ zu Lagerplätzen vorgesehen sein, die einem Portal bzw. einer Schublade zugeordnet sind.

Von besonderem Vorzug ist es jedoch, wenn ein derartiger Schleusenplatz zusätzlich hierzu vorgesehen ist.

Auch kann man den am Boden des Gehäuses angeordneten Schleusenplatz als Teil der vertikal zugeordneten Lagerstation ansehen. So ist es im Extremfall sogar möglich, dass eine der zwei Lagerstationen ausschließlich durch den Werkstückträger-Stapelwagen gebildet ist.

Die erfindungsgemäße Handhabungszelle ist flexibel verwendbar. Die kann insbesondere an verschiedene Transfereinrichtungen angebunden werden. Durch das (in der Regel geschlossene) Gehäuse entsprich die Handhabungszelle den innerhalb einer Fertigungsanlage zu erfüllenden Sicherheitsbestimmungen.

Durch das Bereitstellen von dedizierten Schleusenplätzen, die mit der ersten oder der zweiten Lagerstation vertikal ausgerichtet sind, ist ein kontrolliertes Ein- und Ausschleusen von Werkstückträgern möglich, ohne dass der Platzbedarf in Richtung der Hauptachse vergrößert wird.

Eine Gehäuseöffnung kann ständig offen sein (z.B. in einem oberen Bereich) oder mittels einer Tür oder ähnlichem verschließbar sein.

Insgesamt wird die Aufgabe demzufolge vollkommen gelöst.

Gemäß einem bevorzugten Ausführungsbeispiel ist ein Schleusenplatz ein Platz für einen einzelnen Werkstückträger.

Bei dieser Ausführungsform wird folglich jeweils ein einzelner Werkstückträger ein- und ausgeschleust.

Dabei ist es von besonderem Vorzug, wenn ein Schleusenplatz in einem oberen Bereich des Gehäuses vorgesehen ist und zur Verbindung mit einem Portal ausgelegt ist.

Hierdurch ist es möglich, die Handhabungszelle logistisch mit einem Portal zu koppeln. Da der Werkstückträger innerhalb des Gehäuses nach oben transportiert wird, ist diese Kopplung sicherheitstechnisch günstig.

Dabei ist es von besonderem Vorzug, wenn das Portal senkrecht zur Hauptachse der Handhabungszelle ausgerichtet ist.

Durch diese Maßnahme kann die Handhabungszelle als Zwischenstation an ein Portal gekoppelt werden. Mit anderen Worten muss das Portal nicht an der Handhabungszelle enden sondern kann sich zu beiden Seiten hiervon erstrecken. Hierdurch wird eine flexible Einbindung der Handhabungszelle in die Fertigungsabläufe ermöglicht.

Von besonderem Vorzug ist es, wenn an der Außenseite des Gehäuses und benachbart zu dem Schleusenplatz ein Übergabeplatz angeordnet ist, auf den ein Werkstückträger von dem Schleusenplatz transferiert werden kann, so dass vorzugsweise einzelne Werkstücke und/oder Werkzeuge von einem auf dem Übergabeplatz angeordneten Werkstückträger entnommen bzw. darauf abgelegt werden können.

Bei dieser Ausführungsform dient der außen an dem Gehäuse vorgesehene Übergabeplatz dazu, die Werkstücke von dem Werkstückträger zu entnehmen bzw. nach Bearbeitung wieder darauf abzulegen. Es versteht sich, dass der Transfer von dem Schleusenplatz zu dem Übergabeplatz automatisiert erfolgt und die Entnahme von Werkstücken vorzugsweise mittels eines Portals erfolgt.

Gemäß einer besonders bevorzugten Ausführungsform weist die Handhabungszelle wenigstens zwei übereinander angeordnete Lagerplätze und entsprechend zwei übereinander angeordnete Übergabeplätze auf, so dass eine Kopplung insbesondere mit zwei Portalen möglich ist.

Dabei ist es denkbar, dass die Übergabeplätze in vertikaler Richtung so weit voneinander beabstandet sind, dass sie jeweils als feste Übergabeplätze ausgebildet sein können. Falls die Übergabeplätze unmittelbar übereinander angeordnet sind, kann es bevorzugt sein, wenn der obere Übergabeplatz aus dem Gehäuse ausziehbar ausgebildet ist, um den zugriff auf den darunter liegenden Übergabeplatz zu erleichtern.

Dabei ist es von besonderem Vorzug, wenn die zwei Portale parallel zueinander verlaufen.

Gemäß einer weiteren bevorzugten Ausführungsform ist ein Schleusenplatz in Griffhöhe einer Bedienperson angeordnet und als handbetätigbare Schublade ausgebildet.

Ein derartiger Schleusenplatz kann alternativ zum einem Schleusenplatz vorgesehen sein, der mit einem Portal gekoppelt ist. Vorzugsweise ist ein derartiger Schubladen-Schleusenplatz jedoch zusätzlich hierzu vorgesehen. Ein derartiger Schubladen-Schleusenplatz kann beispielsweise dazu dienen, im laufenden Fertigungsbetrieb zwischendurch einzelne Werkstücke zu kontrollieren. Auch ist es möglich, einzelne Werkstücke hierdurch auszusondern. Dies kann beispielsweise notwendig sein, wenn im rahmen einer Qualitätskontrolle festgestellt wird, dass ein Werkstück bestimmten Qualitätskriterien nicht genügt. Auch sind hierdurch Stichprobenkontrollen möglich.

Eine Schublade auf Bedienpersonhöhe bietet sich dabei an, um die Werkstücke manuell herauszunehmen (und gegebenenfalls wieder in den Fertigungsablauf einzuführen).

Von besonderem Vorzug ist es, wenn die verschiedenen Lagerplätze sämtlich auf einer Seite des Gehäuses vorgesehen sind. Hierdurch ist es möglich, die verbleibenden Seiten der Handhabungszelle frei zur Anordnung eines Schaltschrankes zu nutzen. Ein derartiger Schaltschrank kann demzufolge entweder an den Seiten angeordnet sein. Alternativ hierzu kann der Schaltschrank auch an der den Lagerplätzen gegenüberliegenden Rückseite angeordnet sein.

Insgesamt ist es ferner bevorzugt, wenn die Gehäuseöffnung, die dem Schleusenplatz zugeordnet ist, mit der Hauptachse ausgerichtet ist.

Mit anderen Worten ist es bevorzugt, wenn die Werkstücke bzw. Werkstückträger ausschließlich in Richtung der Hauptachse in das Gehäuse der Handhabungszelle ein- und ausgeschleust werden.

Gemäß einer weiteren bevorzugten Ausführungsform ist an der Handhabungszelle eine Klimaanlage zur Klimatisierung des Innenraumes des Gehäuses vorgesehen.

Da die Toleranzen bei der Bearbeitung von Werkstücken immer kleiner werden, wird es notwendig, die Werkstücke vor einer Bearbeitung auf eine definierte Temperatur zu bringen, um Ungenauigkeiten auf Grund von Materialausdehnungen auf Grund von Wärme zu vermeiden. Dies gilt insbesondere, wenn Werkstücke nach einer ersten Bearbeitung zunächst in der Handhabungszelle zwischenzulagern sind, bevor sie einer weiteren Bearbeitung unterzogen werden. Denn es ist nicht ungewöhnlich, dass die Werkstücke bei einer Bearbeitung erwärmt werden, so dass an sich eine längere Lagerzeit notwendig wäre, um die Werkstücke auf die Umgebungstemperatur zurückzuführen.

Von besonderem Vorzug ist es dabei, wenn die Klimaanlage dazu ausgelegt ist, Kaltluft über eine Einblasöffnung von einer Decke des Gehäuses in den Innenraum einzublasen.

Da insbesondere die Erwärmung von Werkstücken ein Problem ist, ist das Einblasen von Kaltluft von besonderer Bedeutung. Da kalte Luft schwerer ist als warme Luft, ist ein Einblasen von der Decke von besonderem Vorzug.

Dabei ist es besonders bevorzugt, wenn die Einblasöffnung oberhalb einer Lagerstation angeordnet ist und die andere Lagerstation einen Schleusenplatz aufweist, dem eine Öffnung im oberen Bereich des Gehäuses zugeordnet ist.

Auf diese Weise sinkt die Kaltluft zunächst im Bereich der einen Lagerstation nach unten ab und wird schließlich in Richtung hin zu der anderen Lagerstation verdrängt. Auf Grund der Erwärmung steigt die eingeblasene Luft an und kann über die Öffnung im oberen Bereich des Gehäuses entweichen. Hierdurch wird folglich gewährleistet, dass sämtliche Lagerplätze der Handhabungszelle effektiv gekühlt werden.

Ferner ist es vorteilhaft, wenn wenigstens ein Schleusenplatz einer Lagerstation mit einem Werkstückträgerportal verbunden ist, über das Werkstückträger automatisiert in die Handhabungszelle ein- und/oder aus der Handhabungszelle ausgeschleust werden können.

Diese Ausführungsform eignet sich insbesondere für verkettete Fertigungsanlagen.

Da ganze Werkstückträger über das Werkstückträgerportal automatisiert weitertransportiert werden können, können die darauf enthaltenen Werkstücke automatisiert von einem Fertigungsbereich in einen weiteren Fertigungsbereich der Fertigungsanlage überführt werden. Es ist demzufolge nicht notwendig, die Werkstückträger zunächst aus der einen Handhabungszelle manuell wieder auszuschleusen (beispielsweise über einen Werkstückträger-Transportwagen), und dann in eine weitere Handhabungszelle in dem nächsten Fertigungsbereich manuell wieder einzuschleusen. Stattdessen erfolgt eine unmittelbare Verkettung der Fertigungsbereiche über das Werkstückträgerportal.

Es versteht sich, dass es von besonderem Vorzug ist, wenn die Handhabungszelle sowohl wenigstens mit einem Werkstückträgerportal gekoppelt ist, als auch mit einem Portal zum Transportieren von Werkstücken aus der Handhabungszelle zu Bearbeitungsstationen innerhalb des zugeordneten Fertigungsbereiches.

Von besonderem Vorzug ist es, wenn wenigstens ein Schleusenplatz der anderen Lagerstation mit einem weiteren Werkstückträgerportal verbunden ist, über das Werkstückträger automatisiert in die Handhabungszelle ein- und/oder aus der Handhabungszelle ausgeschleust werden können.

Hierbei ist die Handhabungszelle mit ihrer Hauptachse in Transportrichtung der Werkstückträger ausgerichtet. Sie dient entweder lediglich als Puffer für Werkstückträger. Alternativ ist die Handhabungszelle einem Fertigungsbereich zugeordnet und mit einem weiteren Werkstückträgerportal gekoppelt, über das Werkstücke von den Werkstückträgern entnommen und bearbeitet werden können, bevor sie auf Werkstückträgern weitertransportiert werden.

Von besonderem Vorzug ist es daher, dass das Werkstückträgerportal bzw. die Werkstückträgerportale parallel zu der Hauptachse ausgerichtet ist bzw. sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Schnittansicht parallel zu einer Hauptachse einer Handhabungszelle gemäß einer Ausführungsform der Erfindung;
- Fig. 2: eine schematische Draufsicht auf die Handhabungszelle der Fig. 2;
- Fig. 3: eine erste abgewandelte Ausführungsform der erfindungsgemäßen Handhabungszelle;
- Fig. 4: eine weitere abgewandelte Ausführungsform einer erfindungsgemäßen Handhabungszelle;
- Fig. 5: eine Draufsicht auf ein typisches Layout einer erfindungsgemäßen Fertigungsanlage, die eine erfindungsgemäße Handhabungszelle aufweist;
- Fig. 6: eine Draufsicht auf eine weitere Ausführungsform einer erfindungsgemäßen Fertigungsanlage;
- Fig. 7: eine Draufsicht auf eine weitere Ausführungsform einer erfindungsgemäßen Fertigungsanlage; und
- Fig. 8: eine Draufsicht auf eine weitere Ausführungsform einer erfindungsgemäßen Fertigungsanlage.

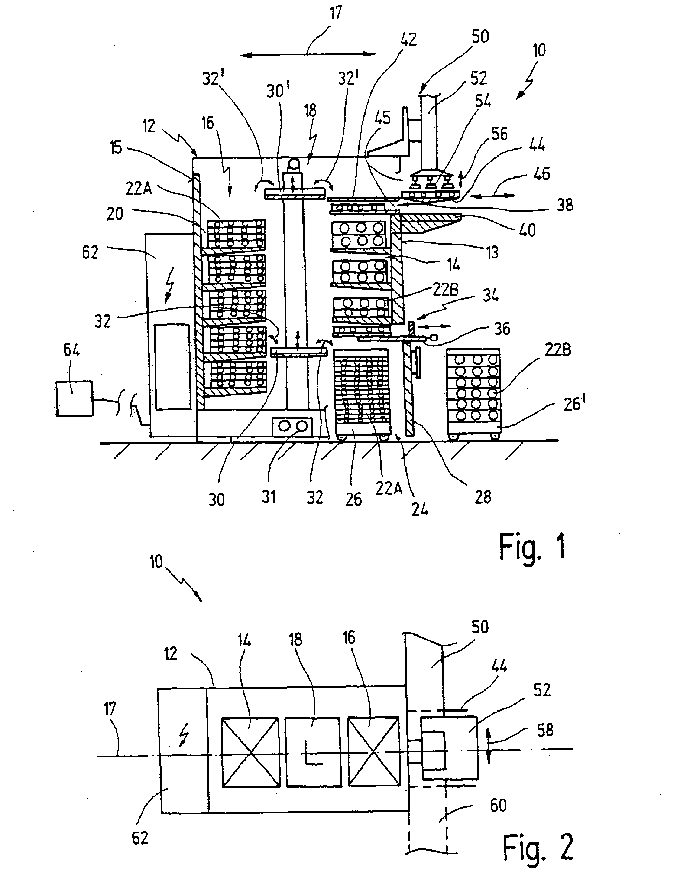

In Fig. 1 ist eine erfindungsgemäße Handhabungszelle generell mit 10 bezeichnet.

Die Handhabungszelle 10 ist dazu ausgelegt, auf einem Fundament stationär angeordnet zu werden. Die Handhabungszelle 10 weist ein allseits geschlossenes Gehäuse 12 auf. Es versteht sich, dass die Handhabungszelle 10 ebenso ein (nicht dargestelltes) stabiles Gestell aufweist, beispielsweise aus Stahlrohren. Vorzugsweise kann die Handhabungszelle 10 als eine Einheit transportiert werden, beispielsweise zum Aufstellen vor Erstinbetriebnahme oder bei einem Umbau der Fertigung.

Das Gehäuse 12 weist eine Vorderseite 13 (in Fig. 1 rechts) und eine Rückseite 15 auf. Innerhalb des Gehäuses 12 ist benachbart zu der Vorderseite 13 eine erste Lagerstation 14 angeordnet. Benachbart zu der Rückseite 15 ist eine zweite Lagerstation 16 angeordnet.

Eine Hauptachse 17 erstreckt sich von der Vorderseite 13 zur Rückseite 15 (vgl. auch Fig. 2).

Zwischen den zwei Lagerstationen 14, 16 ist innerhalb des Gehäuses 12 ein Vertikallift 18 vorgesehen.

Die Lagerstationen 14, 16 bilden jeweils vertikale Speicheranordnungen aus einer Mehrzahl von übereinander angeordneten Lagerplätzen 20.

Auf jedem Lagerplatz 20 können ein oder mehrere Werkstückträger (übereinander) gelagert werden.

In Fig. 1 ist zu erkennen, dass die Handhabungszelle 10 dazu ausgelegt ist, zwei unterschiedliche Typen von Werkstückträgern 22A bzw. 22B zu lagern. Generell ist es natürlich auch möglich, dass noch mehr unterschiedliche Typen von Werkstückträgern in der Handhabungszelle 10 gelagert werden.

Im vorliegenden Fall ist es so, dass der eine Typ Werkstückträger 22A in der zweiten Lagerstation 16 gelagert wird. Dabei sind jeweils vier Werkstückträger 22A übereinander auf einem Lagerplatz 20 angeordnet. Ferner sind die Werkstückträger 22B in der ersten Lagerstation 14 gelagert. Hierbei sind jeweils zwei Werkstückträger 22B übereinander auf einem Lagerplatz 20 angeordnet.

Die Handhabungszelle 10 weist ferner einen ersten Schleusenplatz 24 auf, der im Bereich des Bodens angeordnet und dazu ausgelegt ist, jeweils einen Werkstückträger-Stapelwagen 26 aufzunehmen. Die Werkstückträger-Stapelwagen 26 werden jeweils über eine bodenseitige Tür 28 in das Gehäuse 12 ein- bzw. ausgefahren. Die Tür 28 ist an der Vorderseite 13 des Gehäuses 12 vorgesehen.

Der erste Schleusenplatz 24 ist vertikal mit der ersten Lagerstation 14 ausgerichtet. Genauer gesagt liegen die einzelnen Lagerplätze 20 der ersten Lagerstation 14 oberhalb des ersten Schleusenplatzes 24.

Der Vertikallift 18 weist eine Liftplattform 30 auf. Die Liftplattform 30 ist mittels eines Motors 31 vertikal auf- und abbewegbar.

Ferner sind der Liftplattform 30 Transfermittel 32 zugeordnet, die in Fig. 1 schematisch durch Pfeile angedeutet sind. Die Transfermittel 32 dienen dazu, jeweils einen oder mehrere übereinander angeordnete Werkstückträger von der Liftplattform 30 auf einen der Lagerplätze 20 umzusetzen und umgekehrt. In gleicher Weise dienen die Transfermittel 32 dazu, einen oder mehrere Werkstückträger 22 von dem Werkstückträgerstapel von dem Wagen 26 zu entnehmen und auf die Liftplattform 30 zu setzen. Derartige Transfermittel 32 zum Umsetzen von Werkstückträgern sind allgemein bekannt und werden hier nicht näher erläutert.

Wie es in Fig. 1 dargestellt ist, kann der Vertikallift 18 noch eine weitere Liftplattform 30' aufweisen, der ebenfalls Transfermittel 32' zugeordnet sind.

Hierdurch kann der Handhabungsumsatz gesteigert werden.

Oberhalb des ersten Schleusenplatzes 24 ist ein zweiter Schleusenplatz 34 vorgesehen. Der zweite Schleusenplatz 34 ist als Schublade 36 ausgebildet. Der zweite Schleusenplatz 34 ist für einen einzelnen Werkstückträger 22 angepasst. Die Transfermittel 32 des Vertikalliftes 18 sind dazu ausgelegt, jeweils einen Werkstückträger 22 auf die Schublade 36 im eingezogenen Zustand zu setzen.

Der zweite Schleusenplatz 34 ist in einer solchen Höhe vorgesehen (ca. 80 cm bis 120 cm), dass eine Bedienperson bequem einen Werkstückträger von der ausgezogenen Schublade 36 entnehmen kann. Alternativ kann die Bedienperson natürlich jeweils nur ein Werkstück von dem so präsentierten Werkstückträger entnehmen.

Die Lagerplätze 20 der ersten Lagerstation 14 sind unmittelbar oberhalb des zweiten Schleusenplatzes 34 vorgesehen. Oberhalb der Lagerplätze 20 der ersten Lagerstation 14 sind ein dritter Schleusenplatz 38 und ein vierter Schleusenplatz 42 vorgesehen.

Auch der dritte und der vierte Schleusenplatz 38, 42 sind in vertikaler Richtung mit der ersten Lagerstation 14 ausgerichtet. Sie sind jeweils zur Aufnahme eines einzelnen Werkstückträgers 22 ausgelegt. Die Schleusenplätze 38, 42 sind in einem oberen Bereich des Gehäuses 12 angeordnet. An der Außenseite des Gehäuses 12 ist dem dritten Schleusenplatz 38 ein erster Übergabeplatz 40 zugeordnet. Dem vierten Schleusenplatz 42 ist ein zweiter Übergabeplatz 44 zugeordnet.

Nicht näher dargestellte Transfermittel, die ähnlich ausgebildet sein können wie die Transfermittel 32, sind dazu ausgelegt, jeweils einen Werkstückträger von einem Schleusenplatz 38, 42 auf den zugeordneten Übergabeplatz 40 bzw. 44 umzusetzen, und zwar durch jeweilige Öffnungen 45 in der Wand der Vorderseite 13 des Gehäuses 12.

Dabei ist der obere Übergabeplatz 44, der dem vierten Schleusenplatz 42 zugeordnet ist, nach der Art einer Schublade ausziehbar ausgestaltet, wie es schematisch bei 46 dargestellt ist.

Die Transfermittel 32 sind gleichfalls dazu ausgelegt, jeweils einen Werkstückträger 22 von der Liftplattform 30 auf jeweils einen der Schleusenplätze 38, 42 zu setzen.

Im oberen Bereich des Gehäuses 12 ist ein erstes Portal 50 angeordnet, das mit der Handhabungszelle 10 gekoppelt ist.

An dem ersten Portal 50 ist ein Schlitten 52 in einer Richtung senkrecht zur Hauptachse 17 verfahrbar gelagert. An dem Schlitten 52 ist eine Greifereinrichtung 54 vorgesehen, die entweder dazu ausgelegt ist, jeweils eines oder gleichzeitig mehrere Werkstücke von einem Werkstückträger 22 in vertikaler Richtung nach oben (vertikale Greifrichtung 56) zu entnehmen bzw. wieder darauf abzulegen.

Die Verfahrrichtung des Schlittens 52 ist in Fig. 2 bei 58 dargestellt.

In Fig. 2 ist ferner ein zweites Portal 60 gestrichelt angedeutet. Das zweite Portal 60 ist ebenfalls als Portal zum Transportieren von Werkstücken ausgelegt und ist parallel zu dem ersten Portal 50 ausgerichtet. Das erste Portal 50 kann zur Kopplung mit dem ersten und dem zweiten Übergabeplatz 40, 44 ausgelegt sein. Alternativ ist es auch möglich, dass jedem Portal 50, 60 ein eigener Übergabeplatz zugeordnet wird.

Die Schleusenplätze 24, 34, 38, 42 sind sämtlich an der Vorderseite 13 des Gehäuses 12 vorgesehen.

An der Rückseite des Gehäuses 12 ist ein Schaltschrank 62 vorgesehen.

Die Grundfläche des Gehäuses 12 entspricht in etwa drei nebeneinander angeordneten Werkstückträgern, wie es in Fig. 2 schematisch angedeutet ist.

Die Seitenwangen des Gehäuses 12 können als Türen ausgebildet sein, um für Wartungsarbeiten leicht auf das Innere des Gehäuses 12 zugreifen zu können. Dies ist in den Figuren jedoch nicht näher dargestellt.

Die Funktionsweise der erfindungsgemäßen Handhabungszelle 10, die in den Fig. 1 und 2 dargestellt ist, wird nachfolgend erläutert.

Die Handhabungszelle 10 dient zur Pufferung und Zwischenspeicherung von Werkstückträgern. Auf einem Werkstückträger können ein Werkstück oder mehrere Werkstücke und/oder ein Werkzeug bzw. mehrere Werkzeuge angeordnet sein.

Die Werkstückträger 22 werden in Form eines Stapels auf einem Stapelwagen 26 in den ersten Schleusenplatz 24 eingefahren.

Dort werden die Werkstückträger 22 auf die Speicherplätze 20 der Lagerstationen 14, 16 verteilt. Um die Speicherplätze 20 der Lagerstationen 14, 16 zu füllen, kann es notwendig sein, einen entleerten Stapelwagen 26 aus dem Schleusenplatz 24 herauszufahren und einen weiteren Stapelwagen 26' mit weiteren Werkstückträgern 22 in den Schleusenplatz 24 einzufahren. Anschließend werden die weiteren Werkstückträger 22 in die Speicherplätze 20 eingelagert.

Die Handhabungszelle 10 kann dazu ausgelegt sein, nur einen Typ von Werkstückträger aufzunehmen. Wie dargestellt, können jedoch auch unterschiedliche Typen von Werkstückträgern 22A, 22B in der Handhabungszelle 10 gelagert werden.

Bevorzugt ist es so, dass die genaue Position einzelner Werkstücke auf einzelnen Werkstückträgern 22 innerhalb der Handhabungszelle 10 exakt bekannt ist. Dies kann beispielsweise durch eine übergeordnete Steuervorrichtung realisiert werden, wie sie in Fig. 1 schematisch bei 64 dargestellt ist.

Es versteht sich, dass auf diese Weise das Prinzip der chaotischen Lagerhaltung innerhalb der Handhabungszelle 10 angewandt werden kann.

Die Handhabungszelle 10 ist über das Portal 50 mit einer Bearbeitungsstation (nicht näher dargestellt in den Fig. 1 und 2) verbunden. Bei der Bearbeitungsstation kann es sich beispielsweise um eine Werkzeugmaschine handeln.

Zur Bearbeitung der Werkstücke in dieser Bearbeitungsstation werden einzelne Werkstückträger 22 auf einen der Schleusenplätze 38, 42 überführt. Dies kann beispielsweise erfolgen, indem die Transfermittel 32 zunächst einen Werkstückträger 22 von einem der Speicherplätze 20 auf die Liftplattform 30 übernehmen. Anschließend wird die Liftplattform 30 vertikal verfahren, bis auf die Höhe des jeweiligen Schleusenplatzes 38 bzw. 42. Anschließend dienen die Transfermittel 32 dazu, den Werkstückträger 22 auf den Schleusenplatz 38 bzw. 42 zu setzen.

Im nächsten Schritt wird der Werkstückträger über die Öffnung 45 auf den zugeordneten Übergabeplatz 40 bzw. 44 versetzt, mittels der nicht dargestellten weiteren Transfermittel.

Nun liegt der Werkstückträger 22 frei außerhalb des Gehäuses 12 auf dem Übergabeplatz 40 bzw. 44. Mittels der Greifereinrichtung 54 des Schlittens 52 können nun einzelne (oder gleichzeitig mehrere) Werkstücke von dem Werkstückträger entnommen werden und der Bearbeitungsstation zugeführt werden.

Entweder der Werkstückträger 22 bleibt auf dem Übergabeplatz 40 bzw. 44, und die bearbeiteten Werkstücke werden auf den selben Werkstückträger wieder abgelegt. Alternativ ist es auch denkbar, dass ein leerer Werkstückträger über den Vertikallift 18 zurücktransportiert wird auf einen Stapelwagen 26 für leere Werkstückträger 22, der in dem Schleusenplatz 24 angeordnet ist. Letztere Möglichkeit würde beispielsweise angewandt werden, wenn die Werkstücke nach Bearbeiten in der Bearbeitungsstation auf anderem Wege innerhalb des Fertigungsflusses weitertransportiert werden (also nicht zu der Handhabungszelle 10 zurück).

Falls die Werkstücke jedoch wieder auf den Werkstückträger abgesetzt werden, nachdem sie bearbeitet sind, wird der Werkstückträger 22 mit den bearbeiteten Werkstücken wiederum auf einem der Lagerplätze 20 eingelagert. Bei dieser Ausführungsform sind folglich auf einigen Lagerplätzen 20 Werkstückträger 22 mit unbearbeiteten Werkstücken, und auf anderen Lagerplätzen 20 sind Werkstückträger mit bearbeiteten Werkstücken. Generell ist es sogar denkbar, die Werkstückträger auf einem Speicherplatz 20 untereinander zu mischen.

Die Werkstückträger mit den bearbeiteten Werkstücken können anschließend (oder direkt von dem Schleusenplatz 38 bzw. 42) auf einen Stapelwagen 26 für Werkstückträger mit bearbeiteten Werkstücken überführt werden. Sobald dieser Stapelwagen gefüllt ist, kann ein solcher Werkstückträgerstapel mit bearbeiteten Werkstücken über die Tür 28 manuell herausgefahren werden und einer weiteren Bearbeitung oder Qualitätskontrolle oder ähnlichem zugeführt werden.

Vereinfacht gesagt kann die Handhabungszelle 10 als Puffer in einer Richtung (vom Schleusenplatz 24 zur Bearbeitungsstation) oder als Puffer für beide Richtungen (auch zurück von der Bearbeitungsstation zu dem Schleusenplatz 24) dienen.

Es versteht sich, dass sämtliche Vorgänge bis auf das manuelle Ein- und Ausfahren der Stapelwagen 26 vollautomatisiert erfolgen können. Hierzu ist in der Handhabungszelle 10 (in dem Schaltschrank 62) eine geeignete NC-Steuerung vorgesehen. Diese wird gegebenenfalls mit einer übergeordneten Steuereinrichtung verbunden, die die verschiedenen Stationen einer Fertigungsanlage koordiniert. Hierbei kann es sich um die Steuervorrichtung 64 handeln.

Der zweite Schleusenplatz 34 dient beispielsweise zum manuellen Aussondern von Fehlteilen, zur Stichprobenkontrolle oder anderen Funktionen, die außerhalb des normalen Fertigungsflusses liegen.

Sollte beispielsweise ein bestimmtes Werkstück, das bereits bearbeitet worden ist, vor Ausschleusen aus der Handhabungszelle 10 noch einmal kontrolliert werden, so kann der entsprechende Werkstückträger auf die Schublade 36 des zweiten Schleusenplatzes 34 überführt werden. Anschließend kann eine Bedienperson die Schublade 36 herausziehen und das fragliche Werkstück entnehmen.

In gleicher Weise ist es beispielsweise auch möglich, einen ganzen Werkstückträger über den zweiten Schleusenplatz 34 ein- oder auszuschleusen. Dies kann beispielsweise notwendig sein, wenn der normale Fertigungsfluss gestört ist und die Bearbeitung bestimmter Werkstücke vorgezogen werden soll. Diese können dann beispielsweise über den zweiten Schleusenplatz 34 "außer der Reihe" in die Handhabungszelle 10 eingeschleust werden.

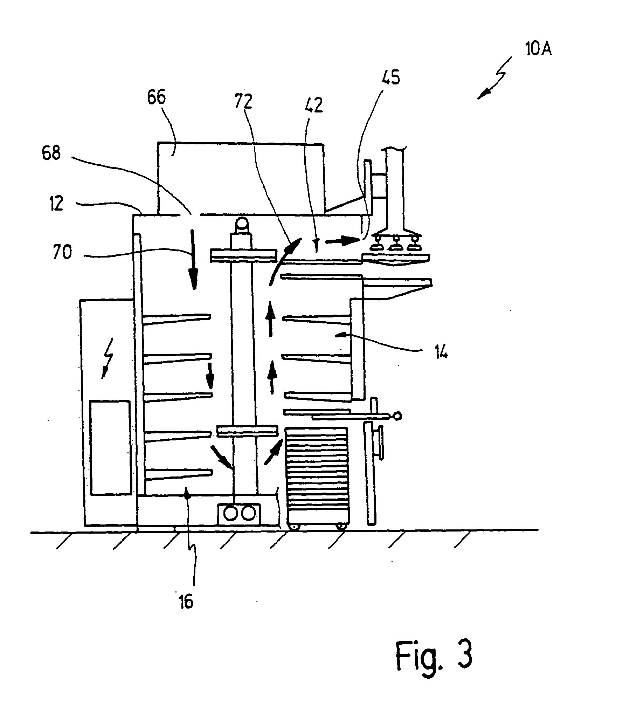

In Fig. 3 ist eine abgewandelte Ausführungsform der erfindungsgemäßen Handhabungszelle generell mit 10A bezeichnet.

Generell ist die Handhabungsvorrichtung 10A in identischer Weise aufgebaut wie die Handhabungszelle 10 der Fig. 1 und 2. Im Folgenden wird daher lediglich auf Unterschiede eingegangen.

An der Oberseite des Gehäuses 12 ist eine Klimaanlage 66 angeordnet.

Die Klimaanlage 66 ist dazu ausgelegt, über eine Einblasöffnung 68 in der Decke des Gehäuses 12 einen Kaltluftstrom 70 in das Innere des Gehäuses 12 einzublasen.

Die Einblasöffnung 68 ist etwa oberhalb der zweiten Lagerstation 16 angeordnet.

Durch die Blaswirkung und die Tatsache, dass kalte Luft schwerer ist als warme Luft, entwickelt sich ein Kaltluftstrom nach unten bis zum Boden des Gehäuses 12. Im Bereich der ersten Lagerstation 14 entwickelt sich dann ein gegenläufiger Luftstrom 72, der schließlich über die Öffnung 45 aus dem Gehäuse 12 austritt.

Durch diese Maßnahme kann gewährleistet werden, dass sämtliche Lagerplätze 20 der ersten und zweiten Lagerstation 14, 16 relativ gleichmäßig von dem Kaltluftstrom 70 gekühlt werden.

Zumindest bilden sich auf diese Weise keine Bereiche aus, in denen die Luft nicht zirkuliert.

Durch die Klimaanlage kann demzufolge eine vorgegebene Temperatur im Inneren des Gehäuses 12 eingestellt werden.

Diese Temperatur ist vorzugsweise etwa gleich der Raumtemperatur.

Auf Grund der Tatsache, dass die Werkstücke nach ihrer Bearbeitung häufig gegenüber der Umgebungstemperatur nicht unerheblich erwärmt sind, könnte die Temperatur im Inneren des Gehäuses 12 allmählich ansteigen. Durch die Klimaanlage 66 wird dies wirksam verhindert.

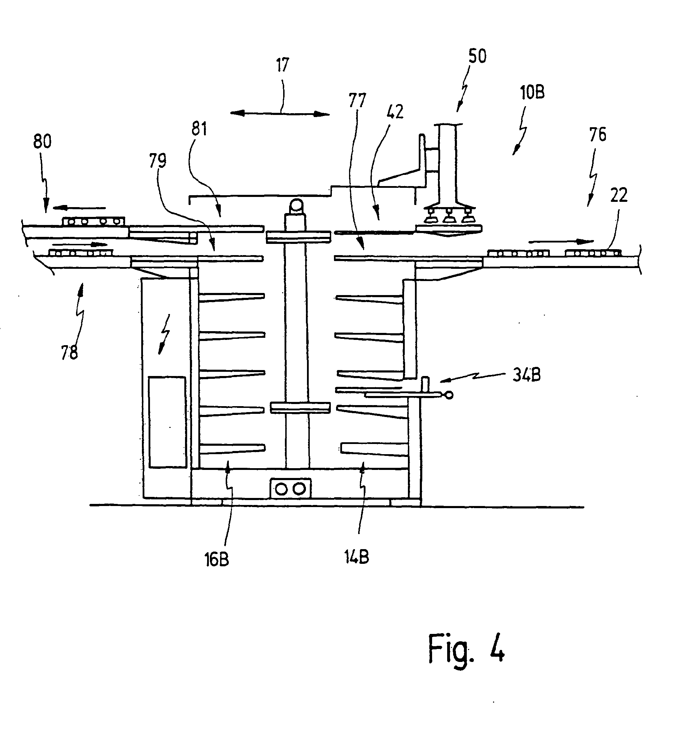

In Fig. 4 ist eine weitere Abwandlung einer erfindungsgemäßen Handhabungszelle generell mit 10B bezeichnet.

Generell ist die Handhabungszelle 10B genauso aufgebaut wie die Handhabungszelle 10 der Fig. 1 und 2. Im Folgenden wird lediglich auf Unterschiede hierzu eingegangen.

Während bei der Handhabungszelle 10 Werkstückträger 22 über den Schleusenplatz 24 in das Innere des Gehäuses 12 eingeschleust werden, erfolgt dies bei der Handhabungszelle 10B über ein oder mehrere Werkstückträgerportale.

Ein erstes Werkstückträgerportal ist in Fig. 4 generell bei 76 gezeigt.

Das Werkstückträgerportal 76 ist einem im oberen Bereich des Gehäuses 12 angeordneten Schleusenplatz 77 zugeordnet. Das Werkstückträgerportal 76 ist dazu ausgelegt, Werkstückträger 22 aus der Handhabungszelle 10B auszuschleusen, wie es durch einen Pfeil in Fig. 4 angedeutet ist.

Ein weiteres Werkstückträgerportal 78 ist einem weiteren Schleusenplatz 79 zugeordnet.

Der Schleusenplatz 79 ist vertikal mit der zweiten Lagerstation 16B ausgerichtet. Das zweite Werkstückträgerportal 78 ist demzufolge an der Rückseite des Gehäuses 12 angeschlossen. Das Werkstückträgerportal 78 dient, wie es durch einen Pfeil angedeutet ist, zum Einschleusen von Werkstückträgern 22 in die Handhabungszelle 10B.

Durch das Bereitstellen derartiger Werkstückträgerportale ist es möglich, Werkstückträger 22 in die Handhabungszelle 10B im Rahmen des regulären Fertigungsflusses ein- und auszuschleusen.

Demzufolge wird der Schleusenplatz 24 der Handhabungszelle 10 nicht benötigt. Er könnte zwar vorgesehen sein, ist im vorliegenden Fall jedoch ersetzt durch zusätzliche Lagerplätze 20 der ersten Lagerstation 14.

Wie es in Fig. 4 gezeigt ist, ist jedoch zum Sonderein- und -ausschleusen weiterhin der zweite Schleusenplatz 34B in Form der Schublade vorgesehen.

Im vorliegenden Fall ist die Handhabungszelle 10B in einen Fertigungsfluss eingeschaltet, bei dem Werkstückträger 22 über ein Werkstückträgerportal 78 zugeführt und über ein weiteres Werkstückträgerportal 76 abgeführt werden. Die Handhabungszelle 10B kann dabei als reine Pufferzelle vorgesehen sein, und in diesem Fall wäre an der Handhabungszelle 10B kein Portal für Werkstücke vorgesehen.

Bevorzugt ist jedoch, wie es in Fig. 4 dargestellt ist, das Portal 50 vorgesehen, um Werkstücke einer Bearbeitungsstation zuzuführen.

Die Richtung des Zu- und Abführens von Werkstückträgern 22 mittels der Werkstückträgerportale 76, 78 erfolgt in Richtung parallel zur Hauptachse 17.

Dies hat den generellen Vorteil, dass die Handhabungszelle 10B mit der Richtung des allgemeinen Fertigungsflusses (parallel zur Hauptachse 17) ausgerichtet werden kann. Die Bearbeitungsstationen zum Bearbeiten von Werkstücken können dann jeweils querab von der Hauptflussrichtung angeordnet werden. Die Handhabungszelle 10B dient dabei als Knotenpunkt zwischen der Hauptrichtung des Fertigungsflusses und dem quer hierzu verlaufenden Portal 50.

Es versteht sich, dass anstelle von einem zuführenden und einem abführenden Werkstückträgerportal 76 bzw. 78 nur ein einzelnes Werkstückträgerportal vorgesehen sein könnte.

Auch versteht sich, dass die Handhabungszelle 10B am Ende einer Fertigungslinie angeordnet sein könnte. In diesem Fall könnte das Abführen von Werkstückträgern in entgegengesetzter Richtung zu dem Zuführen erfolgen. In diesem Fall würde beispielsweise ein weiterer Speicherplatz 81 vorgesehen werden, über den Werkstückträger einem Werkstückträgerportal 80 zugeführt werden können, das die Werkstückträger 22 abführt. Das Werkstückträgerportal 80 kann dabei, wie es in Fig. 4 gezeigt ist, oberhalb (oder unterhalb) des zuführenden Werkstückträgerportals 78 vorgesehen sein.

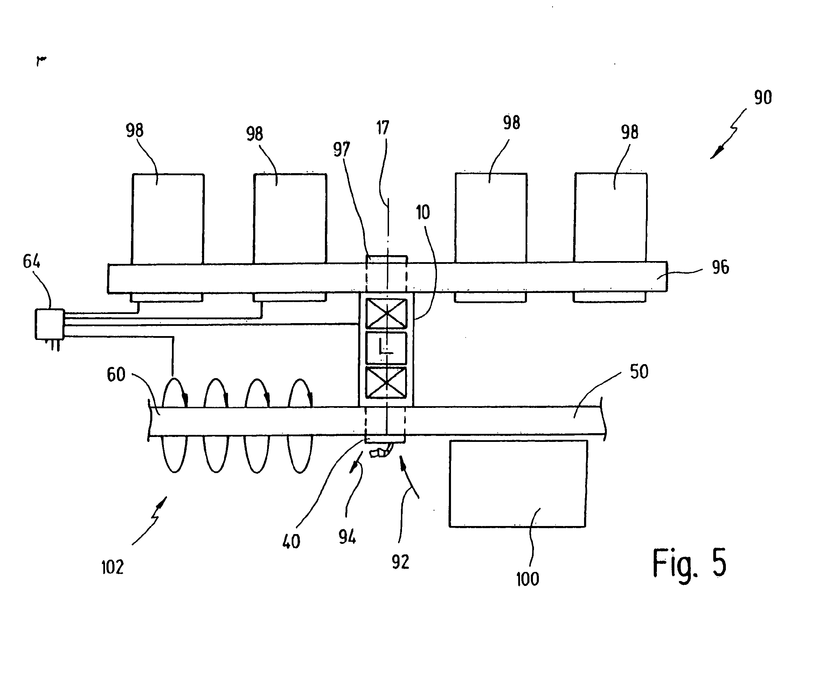

Fig. 5 zeigt eine Fertigungsanlage 90, in die eine erfindungsgemäße Handhabungszelle 10 eingebunden ist.

Die Handhabungszelle 10 der Fertigungsanlage 90 entspricht in ihrer Funktion der Handhabungszelle 10 der Fig. 1 und 2.

Demzufolge ist in Fig. 5 mittels eines Pfeils 92 schematisch angedeutet, dass Werkstückträger mit zu bearbeitenden Werkstücken in die Fertigungsanlage 90 eingeschleust werden, indem sie mittels eines Stapelwagens 26 in den Schleusenplatz 24 eingefahren werden.

In entsprechender Weise ist gezeigt, dass bearbeitete Werkstücke auf Werkstückträgern ausgeschleust werden (Pfeil 94), die auf einem Stapelwagen 26 gestapelt sind.

An der Vorderseite der Handhabungszelle 10 ist das Portal 50 vorgesehen.

Im Unterschied zu der Handhabungszelle 10 der Fig. 1 und 2 ist jedoch noch ein weiteres Portal 96 vorgesehen, das an der Rückseite der Handhabungszelle 10 vorgesehen ist. Die Portale 50, 96 sind parallel zueinander ausgerichtet.

Die Handhabungszelle 10 weist in entsprechender Weise an der Rückseite einen Schleusenplatz (nicht dargestellt) und einen diesem zugeordneten Übergabeplatz 97 auf.

Dem Portal 96 ist eine Mehrzahl von Werkzeugmaschinen 98 zugeordnet. Die Werkzeugmaschinen 98 können von unterschiedlichem Typ oder von gleichem Typ sein.

Dem Portal 50 sind hingegen Kontrollbänder 102 und eine Waschanlage 100 zugeordnet.

Es versteht sich, dass diese Arten von Bearbeitungs- bzw. Inspektionsstationen lediglich beispielhaft genannt sind.

In Fig. 5 ist noch dargestellt, dass eine Steuereinrichtung 64 sowohl mit der Handhabungszelle 10 als auch mit den Bearbeitungsstationen 98, 16 verbunden ist, um die automatisierte Zuführung von Werkstücken und die automatisierte Bearbeitung dieser Werkstücke sowie das Abführen bearbeiteter Werkstücke in koordinierter Weise steuern zu können.

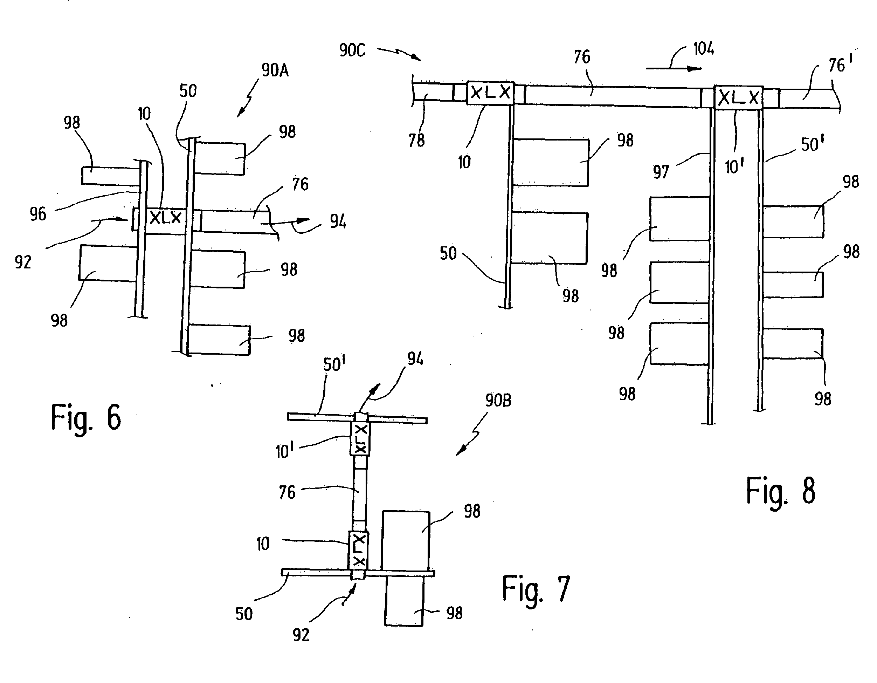

Weitere Ausführungsformen von Fertigungsanlagen sind in den Fig. 6 bis 8 gezeigt. Gleiche oder ähnliche Elemente wie in Fig. 5 sind durch gleiche Bezugsziffern angegeben.

In Fig. 6 ist eine Fertigungsanlage 90A gezeigt, die eine Abwandlung zu der Fertigungsanlage 90 der Fig. 5 darstellt.

Der generelle Aufbau ist ähnlich, mit zwei parallelen Portalen 50, 96.

Zusätzlich hierzu ist jedoch die Handhabungszelle 10 mit einem Werkstückträgerportal 76 gekoppelt.

Hierbei werden, wie es in Fig. 6 durch Pfeile 92 und 94 schematisch dargestellt ist, Werkstückträger über eine Schleusenstation 24 in die Fertigungsanlage 90A eingeführt und über das Werkstückträgerportal 76 abgeführt.

Fig. 7 zeigt eine weitere alternative Ausführungsform, bei der zwei Handhabungszellen 10, 10' über ein Werkstückträgerportal 76 gekoppelt sind.

Werkstückträger werden in die eine Handhabungszelle 10 eingeschleust (beispielsweise über einen Schleusenplatz 24), und werden über die andere Handhabungszelle 10' aus der Fertigungsanlage 90B abgeführt (beispielsweise ebenfalls mittels eines Schleusenplatzes 24).

Fig. 8 zeigt schließlich eine Fertigungsanlage 90C, bei der mehrere Handhabungszellen 10, 10' in Richtung eines Fertigungsflusses 104 hintereinander angeordnet sind. Die Hauptachsen der Handhabungszellen 10, 10' sind dabei mit der Richtung des Fertigungsflusses 104 parallel ausgerichtet.

Die Handhabungszellen 10, 10' sind über Werkstückträgerportale 78, 76, 76' gekoppelt.

Der Handhabungszelle 10 ist ein Portal 50 zum Transportieren von Werkstücken zugeordnet.

Der Handhabungszelle 10' sind zwei Portale 50', 96' zugeordnet.

Es versteht sich, dass mit der erfindungsgemäßen Handhabungszelle 10 eine Vielzahl weiterer Layouts von Fertigungsanlagen realisierbar ist. Das generell dabei verfolgte Layout-Prinzip ist es vorzugsweise, die Handhabungszelle(n) mit ihrer Hauptachse 17 in Richtung des Fertigungsflusses 104 auszurichten und etwaige Bearbeitungsstationen querab hierzu anzuordnen und über Portale 50, 60, 96 mit der Handhabungszelle 10 zu verbinden.

Die Handhabungszellen 10 bilden dabei Knotenpunkte und dienen dabei zur Verknüpfung von Werkstückträgerportalen mit Werkstückportalen. Ferner dienen sie als Puffer für Werkstückträger.

## Patentansprüche

1. Handhabungszelle (10) zum Handhaben von Trägern (22) für Werkstücke und/oder Werkzeuge (Werkzeugträger), mit
- einem Gehäuse (12),
- einer ersten vertikalen Speicheranordnung (14) aus einer Mehrzahl von übereinander angeordneten Lagerplätzen (20) für Werkstückträger (erste Lagerstation),
- einer zweiten solchen Lagerstation (16),
- wenigstens zwei Schleusenplätzen (24; 34; 38; 42; 77; 79; 81), die jeweils mit der ersten oder der zweiten Lagerstation (14, 16) vertikal ausgerichtet sind und denen jeweils eine Öffnung (28; 36; 45) des Gehäuses (12) zugeordnet ist, über die Werkstückträger (22) von außerhalb auf den Schleusenplatz (24; 34; 38; 42; 77; 79; 81) eingeschleust bzw. von dem Schleusenplatz (24; 34; 38; 42; 77; 79; 81) nach außen ausgeschleust werden können, wobei ein Schleusenplatz (24) am Boden des Gehäuses (12) angeordnet ist und zur Aufnahme eines Werkstückträgerstapelwagens (26) dient, der über eine bodenseitige Tür (28) in das Gehäuse (12) einfahrbar ist,
- einem zwischen der ersten und der zweiten Lagerstation (14, 16) angeordneten Vertikallift (18), der dazu ausgelegt ist, Werkstückträger (22) in Richtung einer Hauptachse (17) in die Lagerplätze der ersten und der zweiten Lagerstation (14, 16) sowie in den Schleusenplatz (24; 34; 38; 42; 77; 79; 81) einzulagern und daraus auszulagern,
wobei das Gehäuse (12) die erste und zweite Lagerstation (14, 16), den Vertikallift (18) und die Schleusenplätze (24; 34; 38; 42; 77; 79; 81) umschließt.

2. Handhabungszelle nach Anspruch 1, wobei ein Schleusenplatz (34; 38; 42) ein Platz für einen einzelnen Werkstückträger (22) ist.

3. Handhabungszelle nach Anspruch 2, wobei ein Schleusenplatz (38; 42; 77; 79; 81) in einem oberen Bereich des Gehäuses (12) vorgesehen ist und zur Verbindung mit einem Portal (50; 60) ausgelegt ist.

4. Handhabungszelle nach Anspruch 3, wobei das Portal (50; 60) senkrecht zur Hauptachse (17) der Handhabungszelle (10) ausgerichtet ist.

5. Handhabungszelle nach einem der Ansprüche 2 bis 4, wobei an der Außenseite des Gehäuses (12) und benachbart zu dem Schleusenplatz (38; 42) ein Übergabeplatz (40; 44) angeordnet ist, auf dem ein Werkstückträger (22) von dem Schleusenplatz (38; 42) transferiert werden kann, so dass vorzugsweise einzelne Werkstücke und/oder Werkzeuge von einem auf dem Übergabeplatz (40; 44) angeordneten Werkstückträger (22) entnommen bzw. darauf abgelegt werden können.

6. Handhabungszelle nach Anspruch 5, wobei die Handhabungszelle (10) wenigstens zwei übereinander angeordnete Schleusenplätze (38; 42) und entsprechend zwei übereinander angeordnete Übergabeplätze (40; 44), insbesondere zur Kopplung mit zwei Portalen (50, 60) aufweist.

7. Handhabungszelle nach Anspruch 6, wobei die zwei Portale (50, 60) parallel verlaufen.

8. Handhabungszelle nach einem der Ansprüche 1 bis 7, wobei ein Schleusenplatz (34) in Griffhöhe einer Bedienperson angeordnet und als handbetätigbare Schublade (36) ausgebildet ist.

9. Handhabungszelle nach einem der Ansprüche 1 bis 8, wobei die Gehäuseöffnung (28; 36; 45), die dem Schleusenplatz (24; 34; 38; 42; 77; 79; 81) zugeordnet ist, mit der Hauptachse (17) ausgerichtet ist.

10. Handhabungszelle nach einem der Ansprüche 1 bis 9, wobei eine Klimaanlage (66) zur Klimatisierung des Innenraumes des Gehäuses (12) vorgesehen ist.

11. Handhabungszelle nach Anspruch 10, wobei die Klimaanlage (66) dazu ausgelegt ist, Kaltluft über eine Einblasöffnung (68) von einer Decke des Gehäuses (12) in den Innenraum einzublasen.

12. Handhabungszellen nach Anspruch 11, wobei die Einblasöffnung (68) oberhalb einer Lagerstation (16) angeordnet ist und die andere Lagerstation (14) einen Schleusenplatz (42) aufweist, dem eine Öffnung (45) im oberen Bereich des Gehäuses (12) zugeordnet ist.

13. Handhabungszelle nach einem der Ansprüche 1 bis 12, wobei wenigstens ein Schleusenplatz (77) einer Lagerstation (14B, 16B) mit einem Werkstückträgerportal (76) verbunden ist, über das Werkstückträger (22) automatisiert in die Handhabungszelle (10B) ein- und/oder aus der Handhabungszelle (10B) ausgeschleust werden können.

14. Handhabungszelle nach Anspruch 13, wobei wenigstens ein Schleusenplatz (79, 81) der andren Lagerstation (16B) mit einem weiteren Werkstückträgerportal (78, 80) verbunden ist, über das Werkstückträger (22) automatisiert in die Handhabungszelle (10B) ein- und/oder aus der Handhabungszelle (10B) ausgeschleust werden können.

15. Handhabungszelle nach Anspruch 13 oder 14, wobei das Werkstückträgerportal (76) bzw. die Werkstückträgerportale (76, 78, 80) parallel zur Hauptasche (17) ausgerichtet ist bzw. sind.

16. Fertigungsanlage (90) mit
- wenigstens einer Bearbeitungsstation, beispielsweise einer Werkzeugmaschine (98),
- wenigstens einer Handhabungszelle (10) nach einem der Ansprüche 1 bis 15, und
- wenigstens einer Transfereinrichtung, bzw. einem Portal (50; 60), das die Bearbeitungsstation (98) mit der Handhabungszelle (10) verbindet.

## Claims

1. A handling cell (10) for the handling of carriers (22) for workpieces and/or tools (tool carriers), with
- a housing (12),
- a first vertical storage arrangement (14) of a plurality of storage positions (20) disposed above one another for workpiece carriers (first storage station),
- a second such storage station (16),
- at least two channelling positions (24; 34; 38; 42; 77; 79; 81), which are each aligned vertically with the first or the second storage station (14, 16) and to each of which an opening (28; 36; 45) of the housing (12) is assigned, via which opening the workpiece carriers (22) can be channelled in from the exterior onto the channelling position (24; 34; 38; 42; 77; 79; 81) or channelled out to the exterior from the channelling position (24; 34; 38; 42; 77; 79; 81), whereby a channelling position (24) is disposed at the bottom of the housing (12) and serves to accommodate a workpiece-carrier stacking carriage (26), which can be traversed into the housing (12) via a door (28) at the bottom,
- a vertical lift (18), which is disposed between the first and the second storage station (14, 16) and which is designed to introduce workpiece carriers (22) in the direction of a main axis (17) into the storage positions of the first and the second storage station (14, 16) and into the channelling position (24; 34; 38; 42; 77; 79; 81) and to remove said workpiece carriers from the latter,
whereby the housing (12) encloses the first and second storage station (14, 16), the vertical lift (18) and the channelling positions (24; 34; 38; 42; 77; 79; 81).

2. The handling cell according to claim 1, whereby a channelling position (34; 38; 42) is a position for a single workpiece carrier (22).

3. The handling cell according to claim 2, whereby a channelling position (38; 42; 77; 79; 81) is provided in an upper region of the housing (12) and is designed for connection to a portal (50; 60).

4. The handling cell according to claim 3, whereby the portal (50; 60) is aligned normal to the main axis (17) of the handling cell (10).

5. The handling cell according to any one of claims 2 to 4, whereby there is disposed at the outside of the housing (12) and adjacent to the channelling position (38; 42) a delivery position (40; 44), on which a workpiece carrier (22) can be transferred from the channelling position (38; 42), so that preferably single workpieces and/or tools can be removed from a workpiece carrier (22) disposed on the delivery position (40; 44) or placed thereon.

6. The handling cell according to claim 5, whereby the handling cell (10) comprises at least two channelling positions (38; 42) disposed above one another and correspondingly two delivery positions (40; 44) disposed above one another, in particular for coupling with two portals (50, 60).

7. The handling cell according to claim 6, whereby the two portals (50, 60) run in parallel.

8. The handling cell according to any one of claims 1 to 7, whereby a channelling position (34) is disposed at the grip height of an operative and is designed as a drawer which can be manually operated (36).

9. The handling cell according to any one of claims 1 to 8, whereby the housing opening (28; 36; 45), which is assigned to the channelling position (24; 34; 38; 42; 77; 79; 81), is aligned with the main axis (17).

10. The handling cell according to any one of claims 1 to 9, whereby an air-conditioning system (66) is provided for the air-conditioning of the interior of the housing (12).

11. The handling cell according to claim 10, whereby the air-conditioning system (66) is designed to blow cold air via a blow-in opening (68) from a housing (12) top into the interior.

12. The handling cell according to claim 11, whereby the blow-in opening (68) is disposed above one storage station (16) and the other storage station (14) has a channelling position (42), to which an opening (45) in the upper region of the housing (12) is assigned.

13. The handling cell according to any one of claims 1 to 12, whereby at least one channelling position (77) of one storage station (14B, 16B) is connected to a workpiece carrier portal (76), via which workpiece carriers (22) can be channelled into the handling cell (10B) and/or channelled out of the handling cell (10B) in an automated manner.

14. The handling cell according to claim 13, whereby at least one channelling position (79, 81) of the other storage station (16B) is connected to a further workpiece carrier portal (78, 80), via which workpiece carriers (22) can be channelled into the handling cell (10B) and/or channelled out of the handling cell (10B) in an automated manner.

15. The handling cell according to claim 13 or 14, whereby the workpiece carrier portal (76) or the workpiece carrier portals (76, 78, 80) is or are aligned parallel to the main axis (17).

16. A manufacturing system (90) with
- at least one machining station, for example a machine tool (98),
- at least one handling cell (10) according to any one of claims 1 to 15, and
- at least one transfer arrangement, or a portal (50; 60), which connects the machining station (98) to the handling cell (10).

## Revendications

1. Cellule de manipulation (10) pour manipuler des supports (22) de pièces et/ou d'outils (porte-outils), comprenant
- un carter (12),
- un premier arrangement de stockage vertical (14) composé d'une pluralité de places de stockage (20) disposées les unes au-dessus des autres pour des supports de pièces (première station de stockage),
- une seconde station de stockage (16) du même genre,
- au moins deux places de transfert (24 ; 34 ; 38 ; 42 ; 77 ; 79 ; 81) qui sont alignées verticalement respectivement avec la première ou la seconde station de stockage (14, 16) et auxquelles est respectivement associée une ouverture (28 ; 36 ; 45) du carter (12), par laquelle les supports de pièces (22) peuvent être introduits de l'extérieur sur la place de transfert (24 ; 34 ; 38 ; 42 ; 77 ; 79 ; 81) ou extraits vers l'extérieur depuis la place de transfert (24; 34 ; 38 ; 42 ; 77 ; 79 ; 81), une place de transfert (24) étant disposée au fond du carter (12) et servant à recevoir un chariot d'empilage de supports de pièces (26) qui peut être introduit dans le carter (12) par une porte (28) du côté du fond,
- un élévateur vertical (18) disposé entre la première et la seconde station de stockage (14, 16) qui est conçu pour déposer des supports de pièces (22) en direction d'un axe principal (17) dans les places de stockage de la première et de la seconde stations de stockage (14, 16) ainsi que dans les places de transfert (24 ; 34 ; 38 ; 42 ; 77 ; 79 ; 81) et les en retirer,
le carter (12) entourant la première et la seconde station de stockage (14, 16), l'élévateur vertical (18) et les places de transfert (24 ; 34 ; 38 ; 42 ; 77 ; 79 ; 81).

2. Cellule de manipulation selon la revendication 1, dans laquelle une place de transfert (34 ; 38 ; 42) est une place pour un seul support de pièces (22).

3. Cellule de manipulation selon la revendication 2, dans laquelle une place de transfert (38 ; 42 ; 77 ; 79 ; 81) est prévue dans la zone supérieure du carter (12) et conçue pour être reliée à un portique (50 ; 60).

4. Cellule de manipulation selon la revendication 3, dans laquelle le portique (50 ; 60) est orienté perpendiculairement à l'axe principal (17) de la cellule de manipulation (10).

5. Cellule de manipulation selon l'une des revendications 2 à 4, dans laquelle du côté extérieur du carter (12) et au voisinage de la place de transfert (38 ; 42) est disposée une place de remise (40 ; 44) sur laquelle un support de pièces (22) peut être transféré depuis la place de transfert (38 ; 42), de sorte que de préférence différentes pièces et/ou différents outils puissent être prélevés d'un support de pièces (22) disposé sur la place de remise (40 ; 44) ou y être déposés.

6. Cellule de manipulation selon la revendication 5, dans laquelle la cellule de manipulation (10) présente au moins deux places de transfert (38 ; 42) disposées l'une au-dessus de l'autre et de façon correspondante deux places de remise (40 ; 44) disposées l'une au-dessus de l'autre, en particulier pour le couplage à deux portiques (50 ; 60).

7. Cellule de manipulation selon la revendication 5, dans laquelle les deux portiques (50 ; 60) sont parallèles.

8. Cellule de manipulation selon l'une des revendications 1 à 7, dans laquelle une place de transfert (34) est disposée à portée de main d'un opérateur et réalisée sous la forme d'un tiroir (36) actionnable à la main.

9. Cellule de manipulation selon l'une des revendications 1 à 8, dans laquelle l'ouverture de carter (28 ; 36 ; 45) à laquelle la place de transfert (24 ; 34 ; 38 ; 42 ; 77 ; 79 ; 81) est associée est alignée avec l'axe principal (17).

10. Cellule de manipulation selon l'une des revendications 1 à 9, dans laquelle un système de climatisation (66) pour climatiser l'intérieur du carter (12) est prévu.

11. Cellule de manipulation selon la revendication 10, dans laquelle le système de climatisation (66) est conçu pour souffler de l'air froid à l'intérieur par une ouverture de soufflage (68) d'un plafond du carter (12).

12. Cellule de manipulation selon la revendication 11, dans laquelle l'ouverture de soufflage (68) est disposée au-dessus d'une station de stockage (16) et l'autre station de stockage (14) présente une place de transfert (42) à laquelle est associée une ouverture (45) dans la zone supérieure du carter (12).

13. Cellule de manipulation selon l'une des revendications 1 à 12, dans laquelle au moins une place de transfert (77) d'une station de stockage (14B, 16B) est reliée à un portique de supports de pièces (76) par lequel des supports de pièces (22) peuvent, de manière automatisée, être introduits dans la cellule de manipulation (10B) et/ou extraits de la cellule de manipulation (10B).

14. Cellule de manipulation selon la revendication 13, dans laquelle au moins une place de transfert (79, 81) de l'autre station de stockage (16B) est reliée à un autre portique de supports de pièces (78, 80) par lequel des supports de pièces (22) peuvent, de manière automatisée, être introduits dans la cellule de manipulation (10B) et/ou extraits de la cellule de manipulation (10B).

15. Cellule de manipulation selon la revendication 13 ou 14, dans laquelle le portique de supports de pièces (76) ou les portiques de supports de pièces (76, 78, 80) est ou sont orienté(s) parallèlement à l'axe principal (17).

16. Installation de fabrication (90) comprenant
- au moins un poste d'usinage, par exemple une machine-outil (98),
- au moins une cellule de manipulation (10) selon l'une des revendications 1 à 15 et
- au moins un dispositif de transfert, à savoir un portique (50 ; 60), qui relie le poste d'usinage (98) à la cellule de manipulation (10).
